## Europäisches Patentamt

## European Patent Office

## Office européen des brevets

(19)

(11) Veröffentlichungsnummer : **0 115 342**
**B1**

(12) **EUROPÄISCHE PATENTSCHRIFT**

(45) Veröffentlichungstag der Patentschrift :
28.05.86

(21) Anmeldenummer : **84100830.3**

(22) Anmeldetag : **26.01.84**

(51) Int. Cl.⁴ : **F 16 K 17/34, G 05 D 7/01**

(54) **Verfahren zur Herstellung von Flüssigkeitsmengenreglern.**

(30) Priorität : **27.01.83 DE 3302759**

(43) Veröffentlichungstag der Anmeldung :
**08.08.84 Patentblatt 84/32**

(45) Bekanntmachung des Hinweises auf die Patenterteilung : **28.05.86 Patentblatt 86/22**

(84) Benannte Vertragsstaaten :
**AT CH DE FR GB IT LI NL SE**

(56) Entgegenhaltungen :
**DE-A- 2 707 750**
**DE-A- 2 826 201**
**GB-A-  804 705**
**US-A- 2 802 486**
**US-A- 2 948 296**

(73) Patentinhaber : **Mannesmann, Reinhard Carl**
**Wartaweil 38b**
**D-8036 Herrsching (DE)**

(72) Erfinder : **Mannesmann, Reinhard Carl**
**Wartaweil 38b**
**D-8036 Herrsching (DE)**
Erfinder : **Keppel, Wolf-Dieter**
**1215 West Cornelia**
**Chicago, II. 60657 (US)**

(74) Vertreter : **Schulz, Rütger, Dr. et al**
**STREHL, SCHÜBEL-HOPF, SCHULZ Patentanwalte**
**Widenmayerstrasse 17**
**D-8000 München 22 (DE)**

**Beschreibung**

Die Erfindung betrifft ein Verfahren zur Herstellung von Flüssigkeitsmengenreglern nach dem Oberbegriff des Patentanspruches 1.

Flüssigkeitsmengenregler entsprechend dem Oberbegriff des Patentanspruches 1 sind aus der deutschen Patentschrift DE-C-2 060 751 und aus der DE-B-2 131 117 bekannt.

Wie in der DE-C-2 060 751 beschrieben ist, werden die einzelnen Teile des Reglers, insbesondere der profilierte Kern kzw. die profilierte Innenwandung des Gehäuses, vorzugsweise als Kunststoff-Spritzteil hergestellt. Die von dem Regler durchgelassene Flüssigkeitsmenge wird durch die Größe der Durchlaßöffnungen und demzufolge von der Form der Vorsprünge festegelegt. Die Vorsprünge können dabei unterschiedlich hoch ausgebildet sein, so daß man Hauptnocken und dazwischen liegende niedrigere Abstütznocken unterscheiden kann.

Die Praxis hat nun gezeigt, daß die von dem Regler durchgesetzte Menge äußert empfindlich gegenüber Toleranzschwankungen der verwendeten Ringe ist. Die Toleranzen dieser Ringe schwanken sowohl bezüglich der Abmessungen wie ihrer elastischen Eigenschaften von Lieferung zu Lieferung, so daß man bei der Herstellung großer Stückzahlen das Problem hat, die vorhandenen Gießformen, die auch als Spritznester bezeichnet werden, an die jeweilige Lieferung (Charge) der Ringe anzupassen.

Das bedeutet, daß man für einen bestimmten Typ eines Durchflußmengenreglers nicht mit einer einzigen Gießform, einer « Urform » auskommt, sondern im Laufe der Zeit eine ganze Reihe von Gießformen anfertigen und so abgleichen muß, damit der mit der jeweiligen Gießform hergestellte Regler den vorgegebenen Durchlaß-Sollwert annimmt. Weiterhin unterliegen die Gießformen bei der Herstellung der Formteile einer Abnutzung und Verschmutzung, so daß ihre Lebensdauer auf eine Herstellung von z. B. 50 000 Stück von Formteilen beschränkt ist. Danach werden die Toleranzschwankungen der hergestellten Spritzteile so groß, daß die Durchlaßwerte der damit gebildeten Regler weit vom Sollwert abweichen. Es muß dann eine neue Gießform eingesetzt werden.

Die Herstellung solcher Gießformen ist aber problematisch. Die geometrische Gestalt der profilierten Teile des Reglers ist so, daß die entsprechenden Gießformen kaum mit Schleif- oder Fräsmaschinen hergestellt werden können, sondern daß bevorzugt ein elektroerosives Verfahren, also ein Funkenerosionsverfahren oder ein elektrolytisches Verfahren, angewendet wird. Eine damit hergestellte Gießform kann selbst bei Anwendung der Funkenerosion nicht mit solcher Genauigkeit produziert werden, daß die mit ihr hergestellten Spritzgußteile einen Regler mit exakt dem vorgegebenen Flüssigkeitsdurchsatz ergeben. Das so hergestellte Spritznest ist ein « Rohling » einer Gießform und muß daher so abgeglichen und angepaßt werden, daß die von ihm abgenommenen Spritzgießteile einen Regler mit dem vorgegebenen Sollwert liefern. Zum Abgleichen wird die Gießform so verändert, daß sich die geometrische Gestalt von einem oder von mehreren Vorsprüngen, d. h. der Haupt- oder der Stütznocken, verändert. Dies geschieht beispielsweise durch Abschleifen der Gießform mit einem Diamantschleifstift.

Da die mittels Funkenerosion hergestellten Gießformen relativ teuer sind, muß das Abgleichen sehr vorsichtig vorgenommen werden, damit nicht durch ein übermäßiges Abtragen von Material die Gießform unbrauchbar wird. Es war daher notwendig, in einer großen Anzahl von Schritten die Gießform nachzubearbeiten und nach jedem einzelnen Bearbeitungsschritt ein Probemuster herzustellen und dessen Durchlaßkurve auszumessen. Dies verursacht hohen Zeit- und Kostenaufwand.

Dementsprechend ist es Aufgabe der Erfindung, Maßnahmen anzugeben, mit denen die Herstellung eines eingangs angegebenen Flüssigkeitsmengenreglers vereinfacht werden kann und insbesondere Regeln bereitzustellen, nach denen mit möglichst wenig Arbeitsschritten eine Gießform so abgeglichen werden kann, daß die mit ihr hergestellten Reglerteile einen Regler mit dem vorgegebenen Sollwert für den Flüssigkeitsdurchsatz liefern.

Diese Aufgabe wird mit einem Verfahren nach dem Oberbegriff des Patentanspruches 1 gelöst, das erfindungsgemäß nach der im kennzeichnenden Teil des Patentanspruches 1 angegebenen Weise ausgestaltet ist.

Weitere, vorteilhafte Ausgestaltungen der Erfindung ergeben sich aus den Unteransprüchen.

Das erfindungsgemäße Verfahren beruht auf Untersuchungen der Erfinder zur Wirkungsweise des in dem Patent DE-C-2 060 751 (British patent No. 1 350 846, US-patent No. 3 847 178) beschriebenen Reglers. Die Erfinder haben festgestellt, daß sich bei einem solchen Regler aufgrund des entstehenden Differenzdruckes der elastische Ring in zweierlei Weise verformt. Ein Ring, der beispielsweise einen kreisförmigen Querschnitt hat, wird aufgrund des Differenzdruckes auf eine flache, z. B. elliptische Querschnittsform zusammengepreßt, so daß der Ring gegen die Vorsprünge des profilierten Kerns bzw. der profilierten Mantelflächen wandert und Durchlaßöffnungen verengt. Als Differenzdruck wird die Differenz zwischen dem Druck auf der Zulaufseite und dem Druck auf der Ablaufseite des Reglers bezeichnet. Bei weiter zunehmendem Differenzdruck biegt sich der Ring, bezogen auf seine Umfangsrichtung, durch und bewegt sich in die Durchlaßöffnungen hinein. Nach den Untersuchungen wird die Durchlaßkurve des Reglers davon beeinflußt, wie das Verhältnis zwischen dem Abplatten des Ringes auf einen flachen Querschnitt und seinem Durchbiegen ausfällt.

Dieses Verhältnis wird wiederum von der Form der Vertiefungen und dementsprechend von der Form und dem Abstand der Vorsprünge bestimmt. Ist die Breite der Vertiefungen relativ groß in Bezug auf die Durchbiegungsfähigkeit des Ringes, so kann er bei zunehmendem Druck die Durchlaßöffnung sehr weitgehend verschließen, so daß die Durchlaßkurve nach Durchschreiten eines Maximums, das etwa bei 1 Bar liegt, wieder abfällt. Ist umgekehrt der Abstand zwischen den Vorsprüngen relativ schmal, so kann der elastische Ring sich nicht sehr weit in die Strömungskanäle hineinbiegen, so daß ab einem bestimmten Differenzdruck die Reglerwirkung aufhört und die Durchströmungsmenge näherungsweise linear mit dem Druck zunimmt. Die wirklichen Verhältnisse sind sehr viel verwickelter, weil die Flüssigkeit nicht laminar durch die Durchlaßöffnungen fließt, sondern die Strömung turbulent ist.

Zeigt das von einer Gießform hergestellte Muster eines Reglers eine Durchlaßkurve, die bei zunehmendem Druck nach Erreichen eines Maximums stetig abfällt, so wird gemäß der Erfindung die Tiefe der Strömungsöffnungen erhöht. Verhält sich im Gegensatz dazu das Muster so, daß nach Erreichen eines Maximalwertes die Durchlaßkurve bei zunehmendem Druck zunächst abfällt und dann wieder linear ansteigt, so bedeutet das nach den Untersuchungen der Erfinder, daß die Durchströmungsöffnungen verbreitert werden müssen. Im Hinblick auf das Abgleichen der Gießform ergeben sich damit die im kennzeichnenden Teil des Patentanspruches 1 angegebenen Maßnahmen.

Die Erfindung erzielt damit den Vorteil, daß das Abgleichen der Gießformen gezielt, schnell und ohne großen Ausschuß vorgenommen werden kann, während bisher das Abgleichen mehr einem « Ausprobieren » mit Zufallsergebnissen glich, was naturgemäß einen großen Ausschuß an Gießformen zur Folge hatte.

Legt man für das Abgleichen einen Sollwert zugrunde, den das von der Tochterform abgenommenem Muster des Reglers bei einem Differenzdruck zwischen 0,2 bis 0,5, insbesondere von etwa 0,3 Bar erreicht, so wird das Abgleichen erleichtert, da dann die Reglerkurve ohne Schwierigkeiten sowohl auf eine erhöhte wie auch auf eine erniedrigte Durchlaßmenge abgeglichen werden kann.

Die Nachbearbeitung der Gießform wird noch weiter erleichtert und gegenüber einem übermäßigen Abtragen von Material unempfindlicher, wenn man dafür sorgt, daß die die Stromdurchtrittsöffnungen bestimmenden Vorsprünge bezüglich der Symmetrieachse (Längsachse) des Reglers geneigt verlaufen, vorzugsweise um einen Winkel von etwa 3-15°, insbesondere etwa 10° dazu geneigt sind.

Wie schon erörtert wurde, kann das Abgleichen ausgeführt werden, indem von der Gießform Material mit einem Diamantschleifstift abgetragen wird.

Nach einer bevorzugten Ausführungsart der Erfindung wird zum Abgleichen die sogenannte Drahterosion eingesetzt, d. h. ein Funkenerosionsverfahren mit einer Drahtelektrode. Hiermit lassen sich sehr gezielt kleine geringe Mengen von der Gießform abtragen, so daß eine hohe Genauigkeit erreicht wird. Es kann auch ein elektrolytisches Verfahren zum Abtragen von Material angewendet werden. Es ist insbesondere dann in Betracht zu ziehen, wenn die oberfläche der Gießform auch im mikroskopischen Maßstab glatt sein soll.

Im folgenden wird nun die Erfindung anhand der in den Figuren dargestellten Ausführungsbeispiele beschrieben und näher erläutert.

Die Figur 1 zeigt einen Querschnitt durch einen Regler einer ersten Bauart, auf den die Erfindung angewendet wird,

Die Figur 2 ist eine Draufsicht auf den Regler der Fig. 1,

Die Figur 3 zeigt einen Querschnitt durch einen Regler nach einer zweiten Bauart, auf den die Erfindung ebenfalls angewendet wird,

Die Figur 4 zeigt eine Draufsicht auf den in Fig. 3 dargestellten Regler,

Die Figuren 5A, 6A und 7A zeigen verschiedene, mögliche Durchlaßkurven eines nicht abgeglichenen Reglers,

Die Figuren 5B, 6B und 7B zeigen, an welchen Stellen und in welcher Weise die Gießform eines Reglers nach der Bauart der Fig. 1 und 2 zum Abgleich bearbeitet werden muß,

Die Figuren 5C, 6C und 7C zeigen, an welchen Stellen und in welcher Weise die Gießform eines Reglers nach der in den Fig. 3 und 4 dargestellten Bauart zum Abgleich bearbeitet werden muß,

Die Figuren 8 und 9 zeigen Durchlaßkurven für Regler, deren Gießform erfindungsgemäß abgeglichen worden ist.

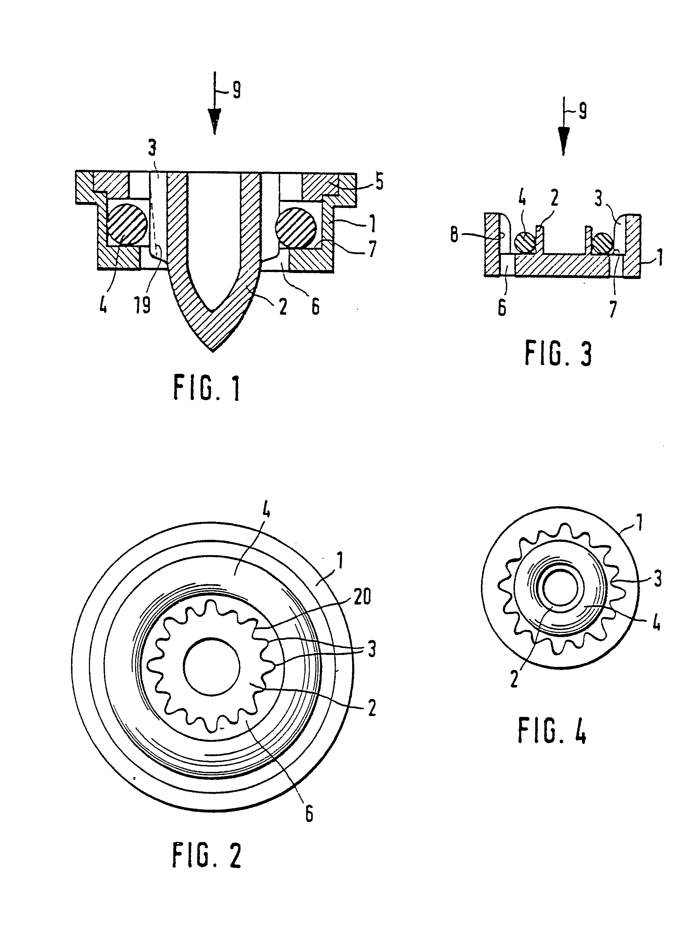

Die Figur 1 zeigt einen Querschnitt durch einen Regler der ersten Bauweise. Er besteht aus einem Gehäuse 1, in dem sich ein Kern 2 befindet. Dieser Kern ist mit einzelnen Vorsprüngen 3 versehen, die unterschiedlich weit von der Mittelachse des Kernes vorstehen können. Um diesen Kern herum liegt ein Gummiring 4. Die Durchflußöffnungen 6 werden durch den Gummiring 4 und die Kontur des Kernes 2 bestimmt. Oberhalb des Gummiringes 4 ist das Gehäuse mit einer Abdeckplatte 5 abgeschlossen. Die Zuflußrichtung der Flüssigkeit ist durch den Pfeil 9 angedeutet. Aufgrund des Differenzdruckes, der zwischen der Zuflußseite und der Ablaufseite auftritt, wird der Gummiring verformt und bewegt sich gegen die Vorsprünge 3 des Kernes 2, so daß die Durchtrittsöffnungen 6 bei zunehmendem Druck zunehmend verschlossen werden. Der Ring bewegt sich dabei auf der Gleitfläche 7 des Gehäuses 1,

Die Figur 2 zeigt in einer Draufsicht die gegenseitige Anordnung von dem Ring 4 und dem Kern 2.

Die Figuren 3 und 4 zeigen eine andere Bauweise des Reglers, wobei das Regelprinzip aber das gleiche ist wie bei dem Regler der in den Fig. 1 und 2 dargestellten Art. Die Fig. 3 zeigt in einem Querschnitt ein zylindrisches Gehäuse 1, auf dessen Innenfläche 8 Vorsprünge 3 mit dazwischenliegenden Vertiefungen eingeformt sind. Der Gummiring 4 umgibt den bei dieser Ausführungsform nicht profilierten Kern 2. Wird der Regler aus der Richtung des Pfeiles 9 mit Flüssigkeit angeströmt, so bewegt sich der Ring aufgrund des an ihm abfallenden Differenzdruckes des Flüssigkeit auf der Gleitfläche 7 gegen die Vorsprünge 3 und verschließt wie bei der ersten Bauart des Reglers bei zunehmendem Druck die Durchflußöffnungen zunehmend, so daß die durchgelassene Flüssigkeitsmenge druckunabhängig und konstant ist. Die Austrittsöffnungen sind mit dem Bezugszeichen 6 bezeichnet.

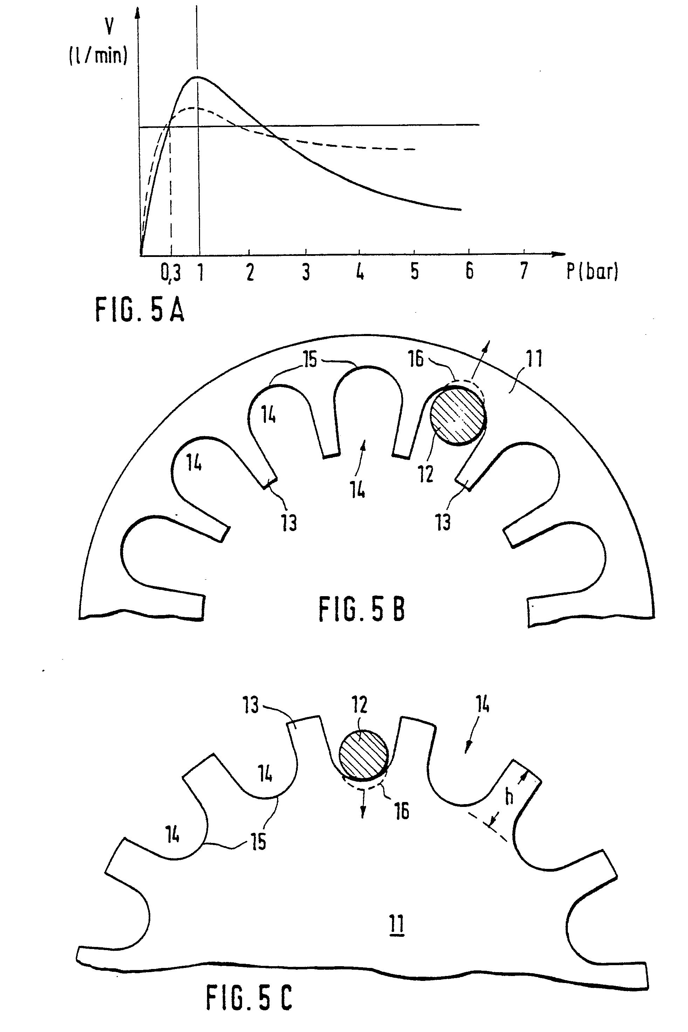

Die Fig. 5A zeigt eine Durchlaßkurve für ein Muster, das von einer noch nicht abgeglichenen Gießform abgenommen ist. Entsprechend der Durchlaßkurve zeigt der Regler ein Verhalten, wonach er nach Erreichen eines Maximums bei zunehmendem Druck immer weiter schließt und die durchströmende Wassermenge weiter drosselt. Als Sollwert, auf den der Regler abgeglichen wird, wird vorzugsweise die Durchflußmenge festgesetzt, die der Regler bei einem Differenzdruck von etwa 0,3 Bar durchläßt. Nach den obigen Betrachtungen läßt sich aus dem Verlauf der Reglerkurve erschließen, daß der elastische Ring sich aufgrund des an ihm herrschenden Druckabfalls zu weit in die Durchlaßöffnungen des Reglers hineinbiegt. Aus diesem Grunde müssen die entsprechenden Vorsprünge weiter vorstehen, so daß der Ring bei gleicher Durchbiegung sich weniger weit auf die Mittelachse des Reglers hinbewegen kann. Die Gießform, die ein Negativbild des Reglerkernes darstellt, muß dementsprechend so geschliffen werden, daß die Vorsprünge des Kernes weiter nach außen treten. Die entsprechende. Nachbearbeitung ist in der Fig. 5B skizziert. In dieser Figur ist die aus Hartmetall bestehende Gießform für den profilierten Kern des Reglers mit dem Bezugszeichen 11 versehen. Diese Gießform weist entlang ihrem inneren Umfang Hohlkammern 14 auf, die voneinander durch nach innen vorspringende Stege 13 getrennt sind. Beim Gießen des Kernes dringt plastisches Material in die Hohlkammern 14 ein und bildet damit die Vorsprünge des Reglersternes. Den Stegen 13 der Gießform 11 entsprechen bei dem Reglerstern nach innen springende Vertiefungen, die die Durchlaßöffnungen des Reglers darstellen. Bei einem Regler der zweiten Bauart (Fig. 3 und 4) hat der profilierte Innenmantel die gleiche Funktion wie der profilierte Kern beim Regler nach der ersten Bauart (Fig. 1 und 2). Die Gießform, die ein Negativbild dieses Innenmantels ist, besitzt die in Fig. 5C dargestellte Querschnittsform. Diejenigen Teile der Gießform, die jenen der in Fig. 5B dargestellten Gießform entsprechen, tragen die gleichen Bezugszeichen. Zum Abgleich eines Reglers mit der in der Fig. 5A dargestellten Reglerkurve werden mit einem Diamantschleifer 12 eine oder mehrere der Hohlkammern 14 vertieft, so daß sie nach der Bearbeitung einer der gestrichelten Linie 16 entsprechende Kontur aufweisen. Mit dem Pfeil ist in den Fig. 5B und C angegeben, in welcher Richtung mit dem Schleifer 12 Material abgetragen wird.

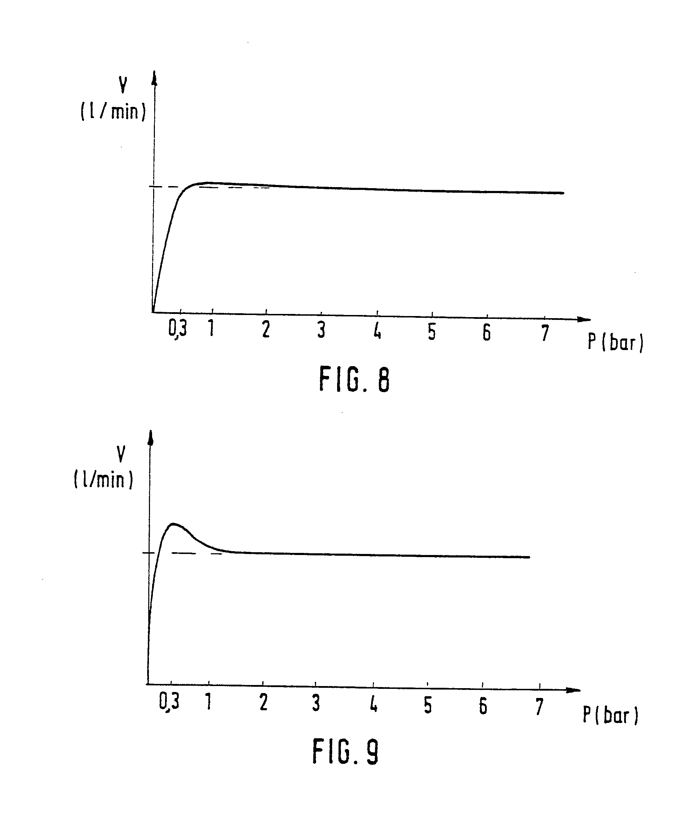

Die Bearbeitung erfolgt zunächst nur an einer der Hohlkammern 14. Reicht diese Bearbeitung nicht aus, und erhält man beispielsweise eine Durchlaßkurve mit der in der Fig. 5A gestrichelt dargestellten Gestalt, so wird in einer weiteren Hohlkammer 14 ein solcher Materialabtrag vorgenommen. Mit der abgeglichenen Gießform erhält man dann Regler, deren Durchlaßkurve der Fig. 8 entspricht, also Regler, die bei etwa 0,3 Bar den Sollwert erreichen und dann bei zunehmendem Druck die Durchflußmenge unabhängig von dem steigenden Druck konstant halten.

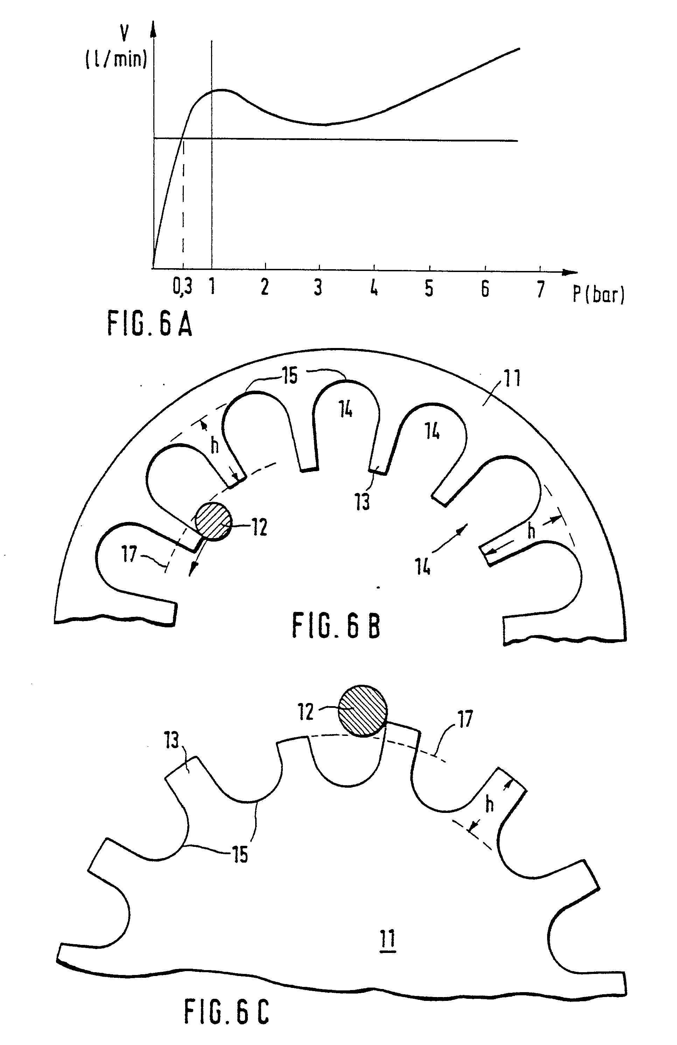

Ergibt das erste Muster, das man von einer noch nicht abgeglichenen Gießform abgenommen hat, eine Durchlaßkurve entsprechend der Fig. 6A, so bedeutet das nach den obenstehenden Ausführungen, daß der elastische Ring sich bei steigendem Druck nicht weit genug in die Durchlaßöffnungen des Reglers hineinbewegen kann. Demzufolge müssen die Durchflußöffnungen verkleinert werden, was dadurch geschieht, daß man die Tiefe der zwischen den Vorsprüngen des profilierten Kernes verlaufenden Vertiefungen oder Nuten 20 flacher macht. Hierzu werden bei der Gießform 11 die nach innen vorstehenden Stege 13 mit einem Schleifer 12 entlang der gestrichelten Linie 17 abgeschliffen, so daß die Höhe h der Stege 13 verringert wird (vgl. Fig. 6B und C).

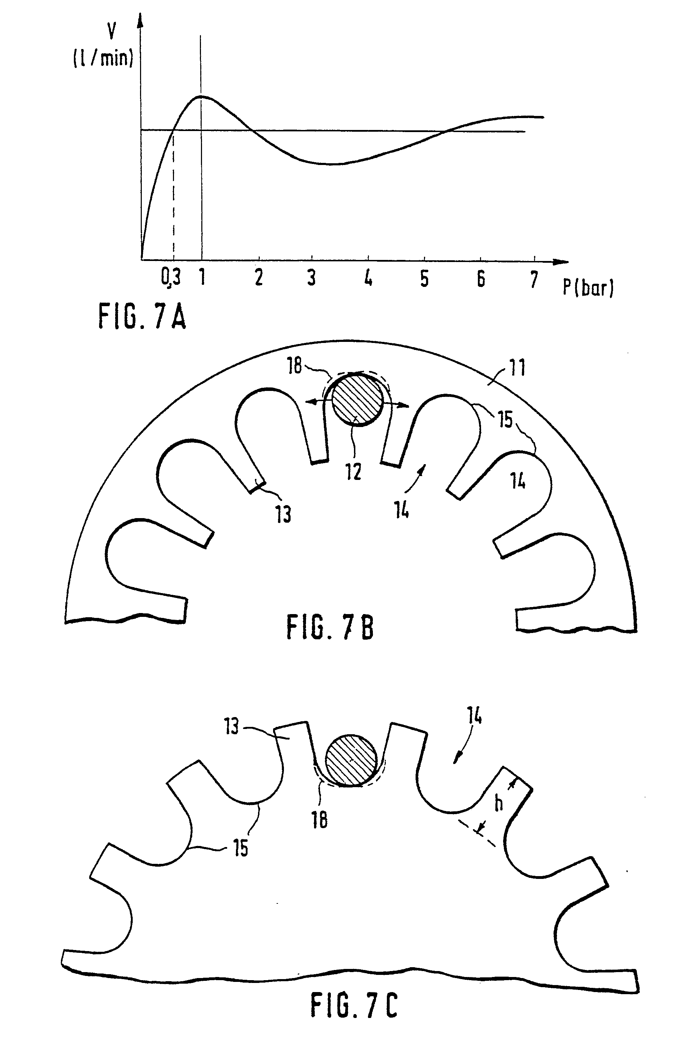

Zeigt das von der noch nicht abgeglichenen Gießform abgenommene Muster des Reglers eine Durchlaßkurve entsprechend der Fig. 7A, die um den Sollwert herum schwankt, so werden die Kammern 14 aufgeweitet, so daß ihre Wandung 15 beispielsweise von einer Kreisform auf eine ovale oder elliptische Gestalt entsprechend der gestrichelten Linie 18 ausgedehnt wird. In den Fig. 7B und C ist mit den Pfeilen dargestellt, wie der Schleifstab 12 in diesem Fall zu bewegen ist.

Mit der beschriebenen Abgleichmethode läßt sich auch ein Regler herstellen, der die in der Fig. 9 dargestellte Durchlaßkurve zeigt. Die Durchlaßkurve weist im Druckbereich unterhalb von 1 bar ein über dem Sollwert liegendes Maximum auf ; die Durchflußleistung nimmt bei zunehmendem Druck dann auf den Sollwert ab und bleibt konstant. Ein solches Reglerverhalten ist dann nützlich, wenn schon bei niedrigem Vordruck eine besonders große Wassermenge durchgesetzt werden soll. Ein solches Reglerverhalten kann man durch eine Kombination der Bearbeitungsmethoden nach den Fig. 6B und C sowie 7B und C erhalten.

Der Abgleich der Gießform wird erleichtert, wenn der Verlauf der Vorsprünge des Kernes bzw. des Innenmantels des Reglers, und damit auch der Verlauf der Kammern 14 der Gießform, nicht parallel zur Achse des Reglers ist, sondern in einem leichten Winkel von etwa 10° dazu. Ein solcher Verlauf ist in Fig. 1 mit der gestrichelten Mantellinie 19 angedeutet. In diesem Fall hat man einen weiteren Parameter für das Abgleichen zur Verfügung, nämlich den auf die Länge des Reglers bezogenen Punkt, an dem ein Vorsprung des Reglersternes — d. h. bei der Gießform eine Hohlkammer 14 — verändert wird.

In den vorstehenden Beispielen und in den Figuren sind Ausführungsformen beschrieben, bei denen die Gießform des Reglers mit einem Schleifwerkzeug 12 bearbeitet wird. Stattdessen können auch funkenerosive Verfahren wie z. B. die Draht-Funkenerosion oder auch ein galvanisches (elektrolytisches) Verfahren zum Abgleichen angewendet werden.

Entsprechend den voranstehenden Überlegungen und Regeln können natürlich auch die Regler selbst nachbearbeitet und auf den gewünschten Sollwert gebracht werden, indem an den entsprechenden Stellen ein Materialabtrag oder — auftrag erfolgt. Dies ist aber — wie erwähnt — erheblich kostenintensiver als ein Abgleichen der Gießform.

**Patentansprüche**

1. Verfahren zur Herstellung von Flüssigkeitsmengenreglern, bei denen ein elastisch verformbarer Ring (4) mit einem von ihm umgebenen profilierten Kern und/oder mit einer ihn umgebenden profilierten Innenfläche (8) eines Gehäuses (1) Durchlaßöffnungen bildet, die von dem sich unter dem Flüssigkeitsdruck verformenden Ring druckabhängig geschlossen werden, wobei der Kern und/oder die Innenfläche eine Anzahl von in Strömungsrichtung verlaufenden Vorsprüngen (3) mit dazwischen befindlichen Vertiefungen 20 aufweisen, mit folgenden Verfahrensschritten :

a) Herstellung einer Gießform (11) für die den profilierten Kern und/oder die profilierte Innenfläche umfassenden Bauteile und Herstellen eines Musters der Regler ;

b) Ausmessen der Durchlaßkurve : Durchflußmenge/Differenzdruck für das Muster ;

c) Festlegung eines Sollwertes für die Durchflußmenge und Abgleichen der Regler auf diesen Sollwert durch Anpassen der Gießform nach Maßgabe der gemessenen Durchlaßkurve ; dadurch gekennzeichnet, daß das Abgleichen und Anpassen der Gießform nach folgenden Regeln ausgeführt wird :

d) steigt die Durchlaßkurve des Musters bei zunehmendem Differenz-Druck P über den Sollwert S an und fällt sie nach Durchlaufen eines Maximums wieder unter den Sollwert S ab (Fig. 5A), so wird eine oder mehrere der den Vorsprüngen des Kernes bzw. der Mantelfläche entsprechenden Hohlkammern (14) der Gießform (11) vertieft (Fig. 5B und 5C), so daß die Vorsprünge höher werden ;

e) steigt die Durchlaßkurve des Musters bei zunehmendem Differenz-Druck P über den Sollwert S an, fällt sie nach Durchlaufen eines Maximums auf ein über dem Sollwert liegendes relatives Minimum ab und steigt sie danach wieder an (Fig. 6A), so werden die zwischen den Hohlkammern (14) der Gießform befindlichen Stege (13) verkürzt (Fig. 6B und 6C), so daß die zwischen den Vorsprüngen des Kernes bzw. der Mantelfläche befindlichen Vertiefungen flacher werden ;

f) steigt die Durchlaßkurve bei zunehmendem Differenz-Druck P über den Sollwert S an, fällt sie nach Durchlaufen eines Maximums unter den Sollwert ab und steigt sie dann wieder über den Sollwert an (Fig. 7A), so wird eine oder mehrere der Hohlkammern (14) der Gießform aufgeweitet (Fig. 7B und C), so daß die Vorsprünge des Kernes bzw. der Mantelfläche in Umfangsrichtung gesehen breiter werden.

2. Verfahren nach Anspruch 1, dadurch gekennzeichnet, daß als Sollwert die bei einem Differenzdruck von etwa 0,2 bis etwa 0,5 bar, insbesondere 0,3 bar, vorliegende Durchflußmenge gewählt wird.

3. Verfahren nach Anspruch 1 oder 2, dadurch gekennzeichnet, daß eine Gießform (11) verwendet wird, bei der die Mantellinien der Hohlkammern (14) um einen Winkel von 3-15°, insbesondere etwa 10° gegen die Mittelachse der Gießform geneigt sind.

4. Verfahren nach einem der Ansprüche 1 bis 3, dadurch gekennzeichnet, daß zum Abgleichen der Gießform ein elektroerosives Verfahren angewendet wird.

5. Verfahren nach Anspruch 4, dadurch gekennzeichnet, daß ein Drahterosionsverfahren angewendet wird.

6. Verfahren nach einem der Ansprüche 1 bis 3, dadurch gekennzeichnet, daß zum Abgleichen der Gießform eine elektrolytisches Verfahren angewendet wird.

**Claims**

1. A method for producing fluid flow regulators, in which an elastically deformable ring (4) and a profiled core surrounded by said ring and/or a profiled inner surface (8) of a casing (1) surrounding said ring form flow passages which are closed by the ring deforming in dependence on the pressure of the fluid, wherein the core and/or said inner surface are provided with a plurality of protrusions (3) extending in the direction of flow and having recesses (20) therebetween, said method comprising :

a) the step of preparing a casting mould (1, 11) for the parts comprising the profiled core and/or the profiled inner surface, and making a sample of the regulators ;

b) the step of measuring the flow characteristic : flow rate/differential pressure of the sample ;

c) the step of fixing a desired value for the flow rate and matching the regulators to this desired value by adapting the casting mould in accordance with the measured flow characteristic ; characterized in that the matching and adaption of the casting mould is performed in accordance with the following rules :

d) if the flow characteristic of the sample rises with increasing pressure P above the desired value S and if after passing through a maximum it drops again below the desired value S (Fig. 5A), one or several of the hollow chambers (14) of the casting mould (11), which correspond to the protrusions of the core and of the inner surface, respectively, will be made deeper (Fig. 5B and 5C) so that the height of the protrusions is increased ;

e) if the flow characteristic of the sample rises with increasing differential pressure P above the desired value S and after passing through a maximum drops to a relative minimum above the desired value and thereupon rises again (Fig. 6A), the webs (13) disposed between the hollow chambers (14) of the casting mould will be made shorter (Fig. 6B and 6C) so that the recesses disposed between the protrusions of the core and the inner surface, respectively, will become less deep ;

f) if the flow characteristic rises with increasing pressure P above the desired value S and after passing through a maximum drops below the desired value and then rises again above the desired value (Fig. 3A), one or several of the hollow chambers (14) of the casting mould will be enlarged (Fig. 7B and 7C) so that the protrusions of the core and of the inner surface, respectively, will become wider as seen circumferentially.

2. The method of claim 1, wherein the rate of flow existing in said regulator at a differential pressure of about 0.2 to about 0.5 bar, in particular 0.3 bar, is selected as the desired value.

3. The method as claimed in claim 1 or 2, wherein a casting mould (11) is used in which the surface lines of the hollow chambers (14) are inclined at an angle of 3 to 15°, in particular about 10° towards the central axis of the casting mould.

4. The method of any of the claims 1 to 3, characterized in that a method of electrical discharge machining is used for adaptation of the mould.

5. The method of claim 4, characterized in that a travelling wire electric discharge machining is applied.

6. The method of any of the claims 1 to 3, characterized in that a method for electrolytic removal is used for the adaptation of the mould.

**Revendications**

1. Procédé pour la fabrication de régulateurs de débits de liquides dans lesquels, une bague (4) élastiquement déformable, comportant un noyau profilé entouré par ladite bague et/ou une surface interne (8) profilée d'un carter (1) entourant ladite bague, forme des orifices de passage qui se ferment en fonction de la pression du liquide qui déforme la bague, le noyau et/ou la surface interne présentant un certain nombre de projections (3) s'étendant dans le sens de l'écoulement et comportant entre elles des renfoncements (20), ledit procédé impliquant les séquences opérationnelles suivantes :

a) fabrication d'un moule de coudée (11) destiné au noyau profilé et/ou aux éléments constructifs entourant la surface interne profilée et fabrication d'un modèle de régulateur ;

b) mesure de la courbe d'écoulement : rapport débit d'écoulement/pression différentielle afférant au modèle ;

c) définition d'une valeur de consigne pour le débit d'écoulement et ajustement des régulateurs sur cette valeur de consigne par adaptation du moule selon les indications données par la courbe d'écoulement mesurée, caractérisé par le fait sur l'ajustement et l'adaptation du moule sont réalisés selon les règles suivantes :

d) si la courbe d'écoulement du modèle dépasse la valeur de consigne S, en cas de croissance de la pression différentielle P, et si après passage par un maximum elle redescend en dessous de ladite valeur de consigne S (fig. 5A), on approfondit un peu plus une seule ou plusieurs des cavités (14) du moule (11) (fig. 5B et 5C), qui correspondent aux projections du noyau ou de la surface de l'enveloppe, de telle sorte que lesdites projections deviennent plus hautes ;

e) si la courbe d'écoulement du modèle dépasse la valeur de consigne S lorsque la pression différentielle P augmente, et si après passage par un maximum elle redescend à un minimum relatif situé au-dessus de la valeur de consigne et remonte ensuite à nouveau (fig. 6A), on raccourcit les barrettes (13) se trouvant entre les cavités (14) du moule (fig. 6B et 6C) de telle sorte que les renfoncements se trouvant entre les projections du noyau ou de la surface de l'enveloppe deviennent plus plats ;

f) si la courbe de flux monte au-delà de la valeur de consigne S, lorsque la pression différentielle P croît, et après avoir parcouru un maximum elle retombe au-dessous de la valeur de consigne et remonte ensuite au-dessus de ladite valeur de consigne (fig. 7A), on élargit une seule ou plusieurs des cavités (14) du moule (fig. 7B et 7C) de telle sorte que les projections du noyau ou de la surface de l'enveloppe deviennent plus larges, vues dans le sens du pourtour.

2. Procédé selon la revendication 1, caractérisé par le fait que l'on choisit comme valeur de consigne le débit présent lorsque la pression différentielle se situe entre environ 0,2 et environ 0,5 bar, en particulier à 0,3 bar.

3. Procédé selon la revendication 1 ou 2, caractérisé par le fait que l'on utilise un moule (11) dans lequel les lignes enveloppantes des cavités (14) sont inclinées d'un angle de 3 à 15°, plus particulièrement d'environ 10°, en direction de l'axe médian du moule.

4. Procédé selon l'une des revendications 1 à 3, caractérisé par le fait que pour ajuster le moule, on utilise un procédé à électro-érosion.

5. Procédé selon la revendication 4, caractérisé par le fait que l'on utilise un procédé à érosion par étincelage transmis par fils.

6. Procédé selon l'une des revendications 1 à 3, caractérisé par le fait que pour ajuster le moule, on utilise un procédé électrolytique.

FIG. 1

FIG. 2

FIG. 3

FIG. 4

FIG. 5 A

FIG. 5 B

FIG. 5 C

FIG. 6 A

FIG. 6 B

FIG. 6 C

FIG. 7A

FIG. 7B

FIG. 7C

4

FIG. 8

FIG. 9